# EUROPEAN PATENT APPLICATION

(11) **EP 1 991 028 A1**
(43) Date of publication of application: **12.11.2008**
(21) Application number: 07713518.4
(22) Date of filing: 27.02.2007
(51) Int. Cl.: H04R 1/02, G02C 11/00, H04M 1/05, H04R 1/00

(54) **GLASSES TYPE SOUND/COMMUNICATION DEVICE**

(30) Priority: 28.02.2006 JP 2006053461
(71) Applicant: Temco Japan Co., Ltd., Tokyo 168-0062 (JP)
(72) Inventor: WAKABAYASHI, Tetsuo, Tokyo 168-0062 (JP)
(74) Representative: Bentz, Jean-Paul
(86) International application number: PCT/JP2007/000136
(87) International publication number: WO 2007/099707

(57) **Abstract**

A spectacle type audio/communication device in which the frame and temples of spectacles is used, and a plurality of parts are embeddedly provided dividedly without being exposed by effectively utilizing the limited space of the frame and temples of the spectacles, whereby a sense of strangeness in terms of appearance is eliminated. The audio/communication device includes a frame (1) and a pair of temples (3, 4) attached to both end parts of the frame (1) via hinges (2). Plate electrodes (6, 6a) are arranged in both end parts of the frame (1), and lead wires (5, 5a) each of which connects the plate electrodes (6, 6a) in one end part and the plate electrodes (6, 6a) in the other end part to each other are embeddedly provided in the frame (1). Parts constituting the audio/communication device, such as a speaker, an amplifier, and a battery, are embeddedly provided dividedly in the temples (3, 4). The parts arranged in one temple (3) and the parts arranged in the other temple (4) are connected electrically to each other via the lead wires (5, 5a) in the frame (1).

## Description

### Technical Field:

The present invention relates to a spectacle type audio/communication device, and more specifically to a spectacle type audio/communication device in which parts constituting a cellular phone function, a radio communication function, a portable audio function, and the like are embeddedly provided in the temple parts and the frame part of spectacles dividedly.

### Background Art:

There have been known audio/communication devices such as sender-receiver devices, hearing aids for hearing-impaired persons, and audio devices using a bone conductive speaker, which are incorporated in spectacles or formed into a spectacle type.

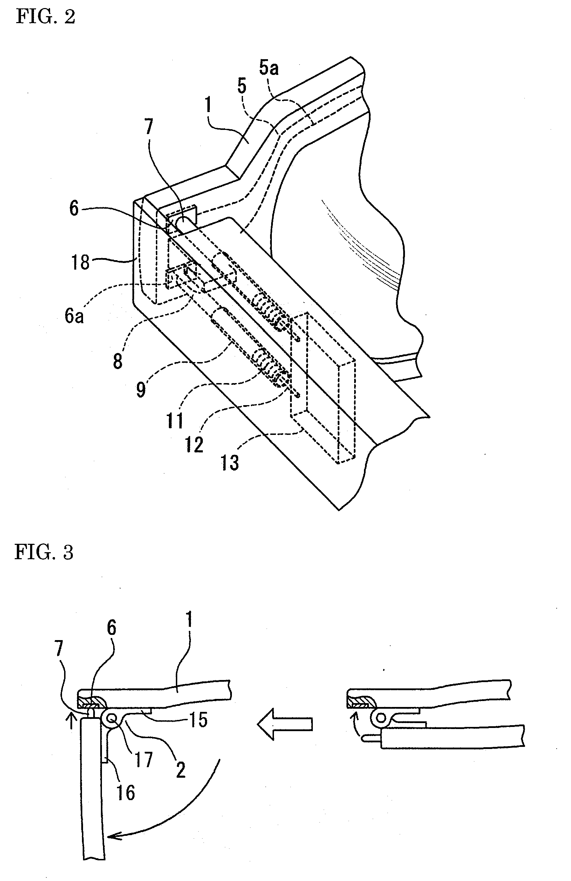

For example, a sender-receiver device in which a bone conductive speaker or a bone conductive microphone is attached to the tip end portion of a spectacle temple (Fig. 3 of Japanese Patent Laid-Open No. 2001-320790, Japanese Patent Laid-Open No. 2005-151292), a bone conductive headset in which a bone conductive speaker is incorporated in the end part of a spectacle temple (Fig. 10 of Japanese Patent Laid-Open No. 2003-18683), and the like have been proposed.

Patent document 1: Japanese Patent Laid-Open No. 2001-320790;
Patent document 2: Japanese Patent Laid-Open No. 2003-18683; and
Patent document 3: Japanese Patent Laid-Open No. 2005-151292.

### DISCLOSURE OF THE INVENTION

### PROBLEMS TO BE SOLVED BY THE INVENTION

Most of the above-described conventional audio/communication devices are configured so that the component parts thereof are attached to spectacles in an exposed state though the devices are called spectacle type ones, so that the devices are inevitably conspicuous and give a sense of strangeness in terms of appearance. Fig. 10 of Japanese Patent Laid-Open No. 2003-18683 shows an example in which parts are incorporated in the end part of a spectacle temple. In this case, however, only a bone conductive speaker is incorporated.

Accordingly, it is an object of the present invention to provide a spectacle type audio/communication device in which the frame and temples of spectacles is used, and a plurality of parts are embeddedly provided dividedly without being exposed by effectively utilizing the limited space of the frame and temples of the spectacles, whereby a sense of strangeness in terms of appearance is eliminated.

### MEANS FOR SOLVING THE PROBLEMS

In order to achieve the above object, in the invention described in claim 1, there is provided a spectacle type audio/communication device characterized in that the audio/communication device comprises a frame and a pair of temples attached to both end parts of the frame via hinges; a plate electrode is arranged in both end parts of the frame, and a lead wire which connects the plate electrode in one end part and the plate electrode in the other end part to each other is embeddedly provided in the frame; parts constituting the audio/communication device, such as a speaker, an amplifier, and a battery, are embeddedly provided dividedly in the temples; a rod electrode which comes into contact with the plate electrode when the temples are in a state of intersecting with the frame at right angles is projectingly provided on the frame-side end face of each of the temples; and a part of the rod electrode is embedded in the temple, and the embedded end part thereof is connected to the part embeddedly provided in the temple, whereby the parts arranged in one of the temples and the parts arranged in the other of the temples are connected electrically to each other.

In a preferred embodiment, the rod electrode is embeddedly provided so as to be movable in the lengthwise direction with respect to the temple. The embedded portion of the rod electrode in the temple is inserted in an insertion hole formed in the end face of the temple and mounted with an elastic member therein, and is always urged toward the outside direction by the elastic member. Usually, the elastic member is a spring, and the tip end of the rod electrode has a semispherical shape.

Preferably, the temple is attachable to and detachable from the frame via the hinge, and a cover part is extendedly formed on the outside face of frame-side end part of the temple.

For example, the hinge is formed by two parts; one of the parts is formed integrally with the frame, and the other of the parts is formed integrally with the temple; one of the parts and the other of the parts can be lapped partially on each other, and are connected turnably to each other by an axial screw threadedly mounted in the lapping part; and by removing the axial screw, the temple can be separated from the frame.

### EFFECT OF THE INVENTION

The spectacle type audio/communication device in accordance with the present invention is configured so that the plurality of parts constituting the device are embeddedly provided so as to be appropriately divided in the frame and the two temples of spectacles, and the parts embeddedly provided in one temple and the parts embeddedly provided in the other temple are connected electrically to each other via the lead wire passing through in the frame by bringing the rod electrode into contact with the plate electrode when the temples are made in a state of intersecting with the frame at right angles. Therefore, the plurality of parts are incorporated efficiently in a limited space. Moreover, since the parts are not exposed, an appearance having no sense of strangeness can be provided, so that the audio/communication device has an effect of being capable of being used without any reluctance.

Also, since the temple can be separated freely from the frame via the hinge, the temple can be exchanged easily. The design of temple is not subject to any restriction, and therefore a temple of favorite design can be chosen.

Further, the present invention has an effect of being capable of being applied to various types of audio/communication devices such as sender-receiver devices, hearing aids, and audio devices.

### BEST MODE FOR CARRYING OUT THE INVENTION

Preferred embodiments for carrying out the present invention will be described with reference to the accompanying drawings.

A spectacle type communication device in accordance with the present invention includes a frame 1 and temples 3 and 4 attached to the frame 1 via a hinge 2. This basic configuration is the same as that of general spectacles. In some case, the hinge 2 is attached directly to the frame 1, and in some case, it is attached to a wraparound endpiece (not shown) projecting from the frame 1.

In the frame 1, one or a plurality of lead wires 5 and 5a leading from one end to the other end of the frame 1 are embeddedly provided, and the end parts of the lead wires 5 and 5a are connected to plate electrodes 6 and 6a, respectively, which plate electrodes 6 and 6a are provided so that the surfaces thereof are exposed in the end part of the frame 1. Thus, a current can be carried from one end to the other end of the frame 1.

On the end faces on the frame 1 side of the temples 3 and 4, rod electrodes 7 and 8 corresponding to the plate electrodes 6 and 6a are provided. The rod electrodes 7 and 8 have a rod shape, and preferably, the tip ends thereof that are to be brought into contact with the plate electrodes 6 and 6a are formed into a semispherical shape. One half part of each of the rod electrodes 7 and 8 is put in the temple 3, 4 from the front end face of the temple 3, 4.

In the example shown in the figures, two plate electrodes 6 and 6a and two rod electrodes 7 and 8 are provided at each end of the frame 1. However, for example, six electrodes may be provided.

Preferably, the rod electrode 7, 8 is provided so that one half part thereof is slidably inserted in an insertion hole 9 formed in the front end face of the temple 3, 4, and the other half part thereof is in a state of projecting from the insertion hole 9. In this case, in the inner part in the insertion hole 9, an elastic member such as a pressing spring 11 or an elastic block is housed, so that the rod electrode 7, 8 is always urged toward the direction such that the rod electrode 7, 8 is pushed out of the insertion hole 9 by the pressing spring 11 etc. Therefore, by causing the temple 3, 4 to intersect at right angles with the frame 1, the rod electrode 7, 8 is pushed slightly into the insertion hole 9 against the urging force of the pressing spring 11 etc. However, as the temple 3, 4 is turned and made in parallel with the frame 1, the rod electrode 7, 8 is returned immediately to the original projecting state by the action of the pressing spring 11 etc.

In the case where the configuration is made as described above, each time the temple 3, 4 is turned with respect to the frame 1, the plate electrode 6, 6a is rubbed by the rod electrode 7, 8, and thereby the dirt adhering to the electrode is removed. Therefore, a poor contact caused by the dirt can be prevented from occurring. Also, the rod electrode 7, 8 can be brought into contact with the plate electrode 6, 6a at right angles while keeping a proper contact pressure by the action of the pressing spring 11 etc.

From the end part in which the rod electrode 7, 8 is put in the insertion hole 9, a lead wire 12 is drawn out. The lead wire 12 passes through the pressing spring 11 etc., being brought further into the inner part from the bottom of the insertion hole 9, and is connected to an embeddedly provided part 13, described later, such as an amplifier or a battery, embeddedly provided in the temple 3, 4.

The hinge 2 can be configured in the same way as the hinge of general spectacles. For example, the hinge 2 is formed by two parts. One part 15 thereof is formed integrally with the frame 1, and the other part 16 is formed integrally with the temple 3, 4 so that the one part 15 and the other part 16 can be partially lapped on each other. The one part 15 and the other part 16 are connected rotatably to each other by an axial screw 17 threadedly mounted in the lapping part. By removing the axial screw 17, the one part 15 is separated from the other part 16, so that the temple 3, 4 can be separated from the frame 1.

To separate the temple 3, 4 from the frame 1 more easily, a publicly-known construction without the use of the axial screw 17 can also be adopted. For example, a hinge in which a spherical shaft provided in the end part of the temple is fitted in a bearing groove part provided in the wraparound endpiece (frame) (Japanese Patent Laid-Open No. 2001-117053), a hinge in which convex parts formed on a nipping spring plate provided in the end part on the temple side are engaged with concave parts provided in the upper and lower face on the wraparound endpiece side (Japanese Utility Model Laid-Open No. 7-34430, Japanese Utility Model Registration No. 3024710, etc.), or a one-touch joint type hinge that consists of two parts of a first part and a second part engaging with each other, and can be simply attached and detached by twisting the second part with respect to the first part, and the like hinges can also be used.

To avoid the exposure of the hinge 2 and electrodes 6, 6a, 7 and 8, a thin cover part 18 is preferably provided extendedly on the outside face of the temple 3, 4 so that the hinge and electrodes are hidden.

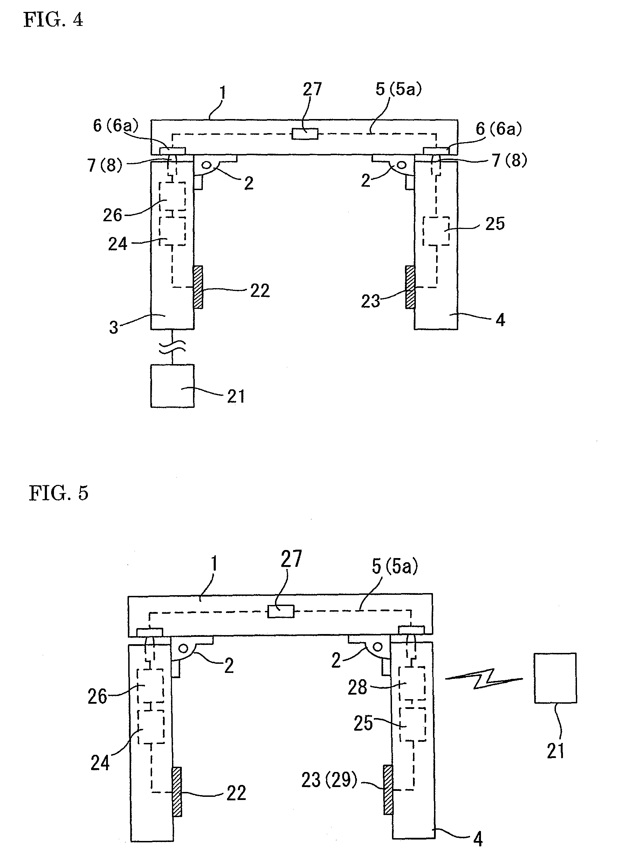

Figs. 4 and 5 show examples of parts embeddedly provided dividedly. In the example shown in Fig. 4, a body 21 such as a telephone set, a sound reproducer, or a walkie-talkie is connected to one temple 3 by wire, and a bone conductive speaker 22 the vibration surface of which is exposed, an amplifier 24 for driving the speaker 22, and a battery 26 serving as a power source are incorporated in the temple 3. Also, in the other temple 4, a bone conductive speaker 23 the vibration surface of which is exposed and an amplifier 25 for driving the speaker 23 are incorporated. The amplifier 25 on the temple 4 side is connected to the battery 26 via the electrodes 6, 6a, 7 and 8 and the lead wires 5 and 5a in the frame 1.

Further, a microphone 27 is sometimes incorporated in the frame 1 as necessary. The microphone 27 is connected to the lead wires 5 and 5a in the frame 1. As the microphone 27, a bone conductive microphone can be used.

In the example shown in Fig. 5, which is another embodiment of the present invention, the bone conductive speaker 22, the amplifier (electric circuit) 24, and the battery 26 are incorporated in one temple 3, and the other temple 4 incorporates the bone conductive speaker 23, the amplifier (electric circuit) 25, and a bluetooth 28, and is connected to the external body 21 such as a telephone set, a sound reproducer, or a walkie-talkie via the bluetooth 28 by wireless. In this case, in place of the bone conductive speaker 23 on one side, a bone conductive microphone 29 can be arranged. In this case, the microphone 27 need not be provided in the frame 1.

Besides, various examples of incorporation of the parts can be thought of. In any case, a large number of parts can be incorporated in a limited installation space efficiently without waste and without damaging the appearance.

In either of the above-described embodiments, when the device in accordance with the present invention is worn in the same way as the ordinary spectacles, the temples 3 and 4 turn via the hinges 2, and become in a state of intersecting at right angles with the frame 1. At this time, the tip ends of the rod electrodes 7 and 8 come into contact with plate electrodes 6 and 6a, respectively. If the rod electrodes 7 and 8 can come out of the end face of the temple 3, 4, the contact of the rod electrodes 7 and 8 with the plate electrodes 6 and 6a is accomplished naturally, and the rod electrodes 7 and 8 are always pushed against the plate electrodes 6 and 6a with a proper pressure by the action of the pressing spring 11 etc., so that a poor contact does not occur.

Thus, the parts in one temple 3 and the parts in the other temple are connected electrically to each other via the lead wires 5 and 5a in the frame 1, by which the expected function is performed.

While the present invention has been described in detail to some extend with reference to the preferred embodiments thereof, it will be understood by those skilled in the art that various changes in form and details may be made therein without departing from the spirit and scope of the present invention as defined by the appended claims. In other words, the present invention is not limited in scope by its specified embodiments.

### BRIEF DESCRIPTION OF THE DRAWINGS

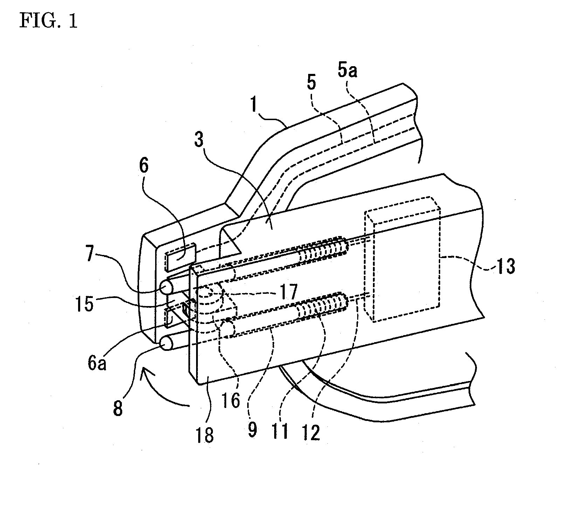

[Fig. 1] is a perspective view of an essential portion of one embodiment of an audio/communication device of the present invention (not in use).
[Fig. 2] is a perspective view of an essential portion of one embodiment of an audio/communication device of the present invention (in use).
[Fig. 3] is a view illustrating the contact relationship between electrodes in one embodiment of an audio/communication device of the present invention.
[Fig. 4] is a view illustrating an example of part arrangement in one embodiment of an audio/communication device of the present invention.
[Fig. 5] is a view illustrating an example of part arrangement in another embodiment of an audio/communication device of the present invention.

## Claims

1. A spectacle type audio/communication device **characterized in that**
said audio/communication device comprises a frame and a pair of temples attached to both end parts of said frame via hinges;
a plate electrode is arranged in both end parts of said frame, and a lead wire which connects said plate electrode in one end part and said plate electrode in the other end part to each other is embeddedly provided in said frame;
parts constituting said audio/communication device, such as a speaker, an amplifier, and a battery, are embeddedly provided dividedly in said temples;
a rod electrode which comes into contact with said plate electrode when said temples are in a state of intersecting with said frame at right angles is projectingly provided on the frame-side end face of each of said temples; and
a part of said rod electrode is embedded in said temple, and the embedded end part thereof is connected to said part embeddedly provided in said temple,
whereby said parts arranged in one of said temples and said parts arranged in the other of said temples are connected electrically to each other.

2. The spectacle type audio/communication device as set forth in claim 1, wherein said rod electrode is embeddedly provided so as to be movable in the lengthwise direction with respect to said temple.

3. The spectacle type audio/communication device as set forth in claim 2, wherein the embedded portion of said rod electrode in said temple is inserted in an insertion hole formed in the end face of said temple and mounted with an elastic member therein, and is always urged toward the outside direction by said elastic member.

4. The spectacle type audio/communication device as set forth in claim 3, wherein said elastic member is a spring.

5. The spectacle type audio/communication device as set forth in claim 1, wherein the tip end of said rod electrode has a semispherical shape.

6. The spectacle type audio/communication device as set forth in claim 1, wherein said temple is attachable to and detachable from said frame via said hinge.

7. The spectacle type audio/communication device as set forth in claim 1, wherein said temple has a cover part extendedly formed on the outside face of frame-side end part thereof.

8. The spectacle type audio/communication device as set forth in claim 1, wherein said hinge is formed by two parts; one of said parts is formed integrally with said frame, and the other of said parts is formed integrally with said temple; one of said parts and the other of said parts can be lapped partially on each other, and are connected turnably to each other by an axial screw threadedly mounted in said lapping part; and by removing said axial screw, said temple can be separated from said frame.
